# EUROPEAN PATENT SPECIFICATION

(11) **EP 2 910 431 B1**
(45) Date of publication and mention of the grant of the patent: **11.04.2018**
(21) Application number: 14000606.5
(22) Date of filing: 20.02.2014
(51) Int. Cl.: B60R 21/203

(54) **AIRBAG MODULE AND ASSEMBLY OF STEERING WHEEL AND AIRBAG MODULE**
AIRBAGMODUL UND ANORDNUNG VON LENKRAD- UND AIRBAGMODUL
MODULE D'AIRBAG ET ENSEMBLE DE VOLANT DE DIRECTION ET MODULE D'AIRBAG

(43) Date of publication of application: 26.08.2015
(73) Proprietor: Dalphi Metal España, S.A., 36213 Vigo (ES)
(72) Inventor: Santin Navarro, Pedro J., 36213 Vigo (ES)
(74) Representative: ZF TRW Patentabteilung

(56) References cited:
- JP-A- 2011 005 976

## Description

The resent invention relates to an airbag module for a steering wheel according to the preamble of claim 1.The present invention further relates to an assembly of a steering wheel and such an airbag module.

From the state of the art an airbag module of this type is known, which is adapted for integration into a steering wheel as a so-called driver airbag. This known airbag module comprises a gas generator which is connected to a covering via an associated gas generator support. This gas generator support does, however, not only serve as a connector between the gas generator and the covering, but also as a power transmission element between the airbag module and the steering wheel. Therefore, the gas generator support is provided as a rigid plastic or metal housing that is fastened to the steering wheel via suitable fastening means, such as brackets. These brackets define together with all other components that constitute the known airbag module a comparatively large number of individual constituting components thereof.

These individual constituting components need to be manufactured with corresponding manufacturing tools, where each required tool increases associated manufacturing costs of the airbag module.

Besides, JP2011-5976 discloses an airbag module of the above kind that corresponds to the preamble of claim 1. In any case, the large number of constituting components increases weight and overall dimensions of the airbag module. Finally, the large number of constituting components increases manufacturing effort and time.

It is, therefore, an object of the present invention to provide a new airbag module that comprises a reduced number of constituting components and a reduced weight, as well as a new assembly of such an airbag module and a steering wheel.

This object is achieved by an airbag module for a steering wheel, according to claim 1. Thus, the fastening means carries out a dual role, i.e. for fastening the inventive airbag module to said steering wheel and for fastening said gas generator to said gas generator support. This allows for an easy and effective reduction of the underlying number of constituting components of the airbag module.

According to the invention, said gas generator comprises a flange-type extension that is fastened to said gas generator support.

Thus, the gas generator can easily, rigidly and securely be fastened to the gas generator support.

According to a preferred embodiment of the invention, said gas generator support is at least substantially made from said airbag fabric.

By implementing the gas generator support with airbag fabric, an underlying number of constituting components of the airbag module can be reduced and an advantageous weight reduction can be achieved.

Furthermore, by reducing the underlying number of constituting components, a corresponding number of manufacturing tools required for manufacturing of these constituting components can likewise be reduced, thereby reducing associated manufacturing costs. Moreover, by reducing the underlying number of constituting components, assembly of the airbag module can be simplified, thereby reducing manufacturing effort and time.

According to a further preferred embodiment, said fastening means comprise at least one bolt, preferably at least one screw, and at least one first nut. Said at least one bolt fastens said gas generator to said gas generator support by means of said at least one first nut. Furthermore, said at least one bolt is adapted to be fastened to said steering wheel by means of at least one second nut.

By using bolts and/or screws for fastening said gas generator, said gas generator support and said steering wheel to each other, a robust and stable connection between these components can be obtained by using simple and inexpensive fastening means.

According to a further preferred embodiment, said fastening means comprise at least one bolt, at least one washer and at least one cap nut. Said at least one bolt fastens said gas generator to said gas generator support by means of said at least one washer and said at least one cap nut. Said at least one cap nut is adapted to be fastened to said steering wheel. Preferably, said at least one cap nut is adapted to be fastened to an associated steering wheel spring of said steering wheel.

By using a suitable cap nut for fastening said gas generator and said gas generator support to said steering wheel, an easy and rapid assembly of these components can be achieved, which only requires a comparatively low assembly effort.

According to a further preferred embodiment, said gas generator support is fastened to said covering by means of at least one associated fastener. Said at least one associated fastener preferably comprises at least one rivet.

By using rivets for fastening said gas generator support to said covering, a robust and stable connection between said gas generator support and said covering can easily and rapidly be obtained by using simple and inexpensive fasteners.

According to a further preferred embodiment, said airbag fabric comprises a woven, knitted or non-woven fabric. Preferably, said airbag fabric comprises natural fibers, synthetic fibers and/or inorganic fibers.

Thus, an inexpensive, reliable and safe airbag fabric can be used for realization of said gas generator support.

The above mentioned object is also achieved by an assembly of an airbag module and a steering wheel according to claim 11.

By implementing the gas generator support with airbag fabric, an underlying number of constituting components of the airbag module can be reduced so that a corresponding number of manufacturing tools required for manufacturing of these constituting components can likewise be reduced, thereby reducing associated manufacturing costs of the inventive assembly. Furthermore, by reducing the underlying number of constituting components, manufacture of the airbag module can be simplified, thereby reducing manufacturing effort and time of the assembly of said airbag module and said steering wheel.

Further details and advantageous developments of the present invention are resulting from the embodiments described hereinafter and illustrated in the accompanying drawings, which are only shown byway of example and by no means meant to restrict the present invention thereto:
Fig. 1 shows a partial sectional view of an airbag module according to the present invention, with fastening means that are embodied according to a first embodiment,
Fig. 2 shows an assembly of the airbag module of Fig. 1 and a steering wheel that is embodied according to a first embodiment,
Fig. 3 shows a partial sectional view of the airbag module of Fig. 1, with the fastening means that are embodied according to a second embodiment, and
Fig. 4 shows an assembly of the airbag module of Fig. 3 and a steering wheel that is embodied according to a second embodiment.

In the following description the terms left, right, front, rear, top and bottom relate to the respective drawing figure and may vary in dependence on a respectively selected alignment (portrait or landscape) from one drawing figure to another. Equal or equally acting parts are denoted with the same reference numbers in different figures and are usually described only once.

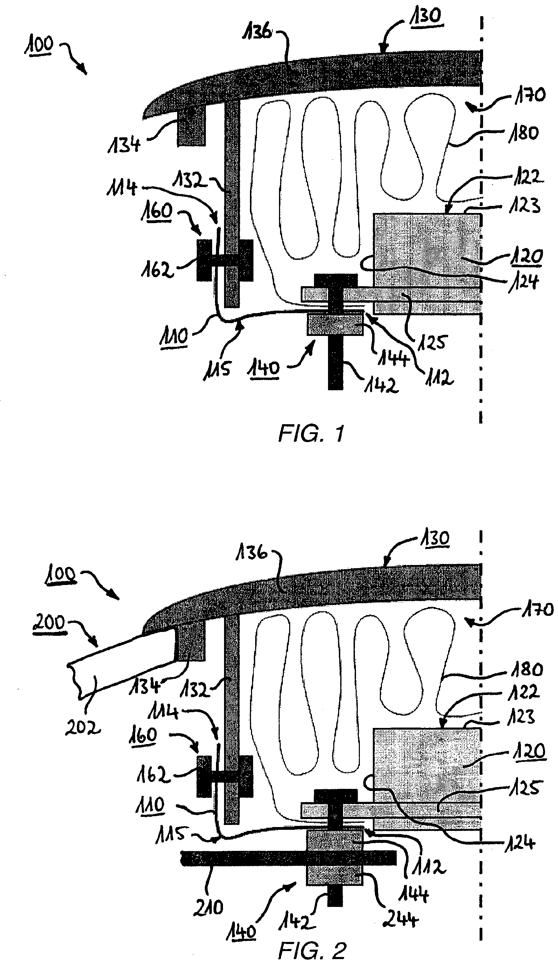

**Fig. 1** shows an airbag module 100 for a steering wheel (200 in Fig. 2) according to a first embodiment, which is implemented as a so-called driver airbag. The airbag module 100 comprises a folded air bag 180 which is inflatable by an associated gas generator 120. A gas distribution member or diffusor may optionally be arranged in an area between the gas generator 120 and the folded air bag 180.

The gas generator 120 can be realized e.g. by a gas generator known from the state of the art, which is also referred to as an inflator in the state of the art. Illustratively, the gas generator 120 comprises an inversed cup-shaped casing 122 having a bottom 123 which is transferred, via an outer circumference 124, into a flange-type extension 125, hereinafter also referred to as flange 125.
The gas generator 120, and preferably the flange 125, is fastened to an associated gas generator support 110 which comprises an airbag fabric 115. Preferably, the gas generator support 110 is entirely, or at least substantially, made from said airbag fabric 115, thereby defining a fabric housing of the airbag module 100.
The airbag fabric 115 comprises, by way of example, a woven, knitted or non-woven fabric. Preferably, the airbag fabric 115 comprises natural fibers, synthetic fibers and/or inorganic fibers. By way of example, the airbag fabric 115 of the gas generator support 110 as such is disk-shaped and comprises an outer circumference 114 and an inner opening that defines an inner circumference 112 thereof.
According to the invention, the gas generator support 110 is fastened to the gas generator 120 and an air bag cap or covering 130, thereby interconnecting the gas generator 120 with the covering 130. The covering 130 illustratively comprises an upper cover portion 136 with an integral ring wall 132 and at least one centering element 134 for centering the covering 130 to an associated steering wheel (200 in Fig. 2).
The gas generator support 110 is fastened to the covering 130 by means of at least one associated fastener 160, which preferably comprises at least one rivet 162. Illustratively, the outer circumference 114 of the gas generator support 110 is folded upwards and fastened to the ring wall 132 of the covering 136 by a plurality of rivets 162.

The gas generator support 110 is fastened to the gas generator 120 by means of fastening means 140, which are preferably also adapted to be fastened to an associated steering wheel (200 in Fig. 1), as described below with reference to Fig. 2. According to a first embodiment, the fastening means 140 comprise at least one and preferably a plurality of bolts 142 and at least one and preferably a plurality of first nuts 144, which fasten the inner circumference 112 of the gas generator support 110 to the gas generator 120, and preferably to the flange 125.

More specifically, the inner circumference 112 of the gas generator support 110 is arranged on the plurality of bolts 142, preferably together with a free end of the folded air bag 180, which is also designated with the reference number 112 for simplicity and clarity of the drawings, and secured on the plurality of bolts 142 by means of the plurality of first nuts 144. Accordingly, the inner circumference 112 and the free end 112 are fastened to the flange 125.

It should be noted that the plurality of bolts 142 can be realized using e.g. screws. However, any kind of bolt that is suitable for fastening the folded air bag 180 and the gas generator support 110 to the gas generator 120, and that is readily available from the common knowledge of a person skilled in the art, can be used for realization of the plurality of bolts 142.

**Fig. 2** shows an exemplary assembly of the airbag module 100 of Fig. 1 with an associated steering wheel 200, which is only represented by a partly illustrated steering wheel foam 202 and a partly illustrated steering wheel frame 210 for simplicity and clarity of the drawings. By way of example, the airbag module 100 is centered to the steering wheel 200 by means of the at least one centering element 134 of the covering 130 of Fig. 1 that engages the steering wheel foam 202.

According to the first embodiment, the airbag module 100 is fastened to the steering wheel 200 by means of the fastening means 140 of Fig. 1. Therefore, the at least one and preferably the plurality of bolts 142 of the fastening means 140 are fastened to the steering wheel 200 by means of at least one and preferably a plurality of second nuts 244.

More specifically, the plurality of bolts 142 preferably partly passes or traverses the steering wheel frame 210, i.e. suitable openings or recesses thereof, such that the plurality of first nuts 144 of Fig. 1 which are secured to the plurality of bolts 142 are arranged on an upper face side of the steering wheel frame 210. By securing at least one and preferably a plurality of second nuts 244 on the plurality of bolts 142 such that the plurality of second nuts 244 is arranged on a lower face side of the steering wheel frame 210, the airbag module 100 is fastened to the steering wheel 100.

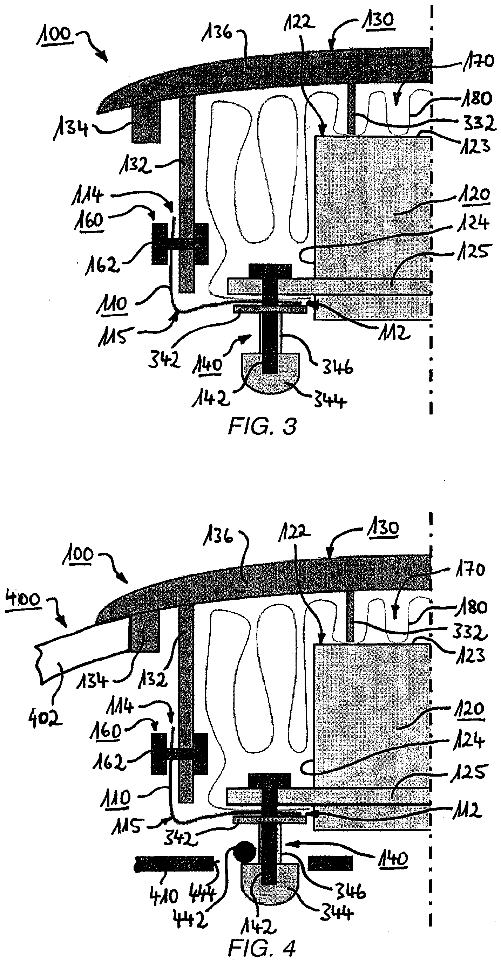

**Fig. 3** shows the airbag module 100 of Fig. 1 with the fastening means 140 and the covering 130 of Fig. 1, which are now embodied according to a second embodiment. The covering 130 now comprises in addition to the upper cover portion 136 with the integral ring wall 132 and the least one centering element 134 of Fig. 1 one or more cover ribs 332. These cover ribs 332 serve as spacers that are adapted to maintain a predetermined distance between the upper cover portion 136 and the gas generator 120 of Fig. 1.

The fastening means 140 according to the second embodiment comprise the least one and preferably the plurality of bolts 142 of Fig. 1, and at least one and preferably a plurality of washers 342, as well as at least one and preferably a plurality of cap nuts 344. The cap nuts 344 are preferably adapted to be fastened to an associated steering wheel (400 in Fig. 4), and are illustratively embodied as round cap nuts with associated distance members 346. These distance members 346 can be provided as separate components or as integral parts of associated cap nuts 344.

Preferably, the plurality of bolts 142, the plurality of washers 342 and the plurality of cap nuts 344 with the associated distance members 346 fasten the inner circumference 112 of the gas generator support 110 together with the free end 112 of the folded air bag 180 to the gas generator 120, and preferably to the flange 125. More specifically, the inner circumference 112 of the gas generator support 110 and the free end 112 of the folded air bag 180 are arranged and secured on the plurality of bolts 142 by means of the plurality of washers 342 and the plurality of cap nuts 344 with the associated distance members 346. Accordingly, the inner circumference 112 and the free end 112 are fastened to the flange 125. **Fig. 4** shows an exemplary assembly of the airbag module 100 of Fig. 3 and an associated steering wheel 400, which is for simplicity and clarity of the drawings only represented by a partly illustrated steering wheel foam 402 and a partly illustrated steering wheel frame 410 having openings 444 that are equipped with steering wheel springs 442 of said steering wheel 400. By way of example, the airbag module 100 is centered to the steering wheel 400 by means of the at least one centering element 134 of the covering 130 of Fig. 3 that engages the steering wheel foam 402. According to the second embodiment, the airbag module 100 is fastened to the steering wheel 400 by means of the fastening means 140 of Fig. 3. Therefore, the at least one and preferably the plurality of bolts 142 of the fastening means 140 are fastened to the steering wheel 400 and, more speicifcally, the steering wheel springs 442, by means of the at least one and preferably the plurality of cap nuts 344. The plurality of cap nuts 344 defines a clipping system with the steering wheel springs 442.

More specifically, the plurality of bolts 142 equipped with the plurality of distance members 346 and the plurality of cap nuts 344 preferably partly traverses associated openings 444 provided in the steering wheel frame 410, such that the cap nuts 344 are at least partly arranged beyond the steering wheel springs 442, which are elastically secured in the region of the distance members 346. By elastically securing the steering wheel springs 442 in the region of the distance members 346, the airbag module 100 is fastened to the steering wheel 400.

## Claims

1. An airbag module (100) for a steering wheel (200), comprising fastening means (140) and further comprising a gas generator support (110) that interconnects a gas generator (120) with a covering (130), said gas generator support (110) being fastened to said gas generator (120) and said covering (130), wherein said gas generator support (110) comprises an airbag fabric (115) **characterized in that** said gas generator (120) comprises a flange-type extension (125) which is fastened to an inner circumference defined by an inner opening of the gas generator support (110) together with a free end of a folded air bag (180) via said fastening means (140), said fastening means (140) being adapted to be fastened to said steering wheel (200).

2. The airbag module according to claim 1, **characterized in that** said gas generator support (110) is at least substantially made from said airbag fabric (115).

3. The airbag module according to claim 1 or 2, **characterized in that** the covering (130) comprises an upper cover portion (136) with an integral ring wall (132) and at least one centering element (134) for centering the covering (130) to said steering wheel (200).

4. The airbag module according to at least one of the preceding claims 1 to 3, **characterized in that** said gas generator support (110) is fastened to the covering (130) by means of at least one associated fastener (160), which preferably comprises at least one rivet (162).

5. The airbag module according to one of the claims 1 to 4, **characterized in that** said fastening means (140) comprise at least one bolt (142), preferably at least one screw, and at least one first nut (144), said at least one bolt (142) fastening said gas generator (120) to said gas generator support (110) by means of said at least one first nut (144), wherein said at least one bolt (142) is adapted to be fastened to said steering wheel (200) by means of at least one second nut (244).

6. The airbag module according to one of the claims 1 to 4, **characterized in that** said fastening means (140) comprise at least one bolt (142), at least one washer (342) and at least one cap nut (344), said at least one bolt (142) fastening said gas generator (120) to said gas generator support (110) by means of said at least one washer (342) and said at least one cap nut (344), wherein said at least one cap nut (344) is adapted to be fastened to said steering wheel (400).

7. The airbag module according to claim 6, **characterized in that** said at least one cap nut (344) is adapted to be fastened to an associated steering wheel spring (442) of said steering wheel (400).

8. The airbag module according to at least one of the preceding claims 1 to 7, **characterized in that** said gas generator support (110) is fastened to said covering (130) by means of at least one associated fastener (160), said at least one associated fastener (160) preferably comprising at least one rivet (162).

9. The airbag module according to at least one of the preceding claims 1 to 8, **characterized in that** said airbag fabric (115) comprises a woven, knitted or non-woven fabric.

10. The airbag module according to at least one of the preceding claims 1 to 9, **characterized in that** said airbag fabric (115) comprises natural fibers, synthetic fibers and/or inorganic fibers.

11. An assembly of an airbag module (100) according to claim 1 and a steering wheel (200), said fastening means (140) are fastened to said steering wheel (200).

## Patentansprüche

1. Airbagmodul (100) für ein Lenkrad (200), mit Befestigungsmitteln (140) und weiterhin mit einer Gasgeneratorhalterung (110), die einen Gasgenerator (120) mit einer Abdeckung (130) verbindet, wobei die Gasgeneratorhalterung (110) an dem Gasgenerator (120) und der Abdeckung (130) befestigt ist, wobei die Gasgeneratorhalterung (110) ein Airbaggewebe (115) umfasst, **dadurch gekennzeichnet, dass** der Gasgenerator (120) eine flanschartige Erweiterung (125) umfasst, die an einem, von einer inneren Öffnung der Gasgeneratorhalterung (110) definierten, inneren Umfang zusammen mit einem freien Ende eines gefalteten Airbags (180) mit Hilfe der Befestigungsmittel (140) befestigt ist, wobei die Befestigungsmittel (140) an dem Lenkrad (200) befestigt werden können.

2. Airbagmodul gemäß Anspruch 1, **dadurch gekennzeichnet, dass** die Gasgeneratorhalterung (110) zumindest im Wesentlichen aus dem Airbaggewebe (115) besteht.

3. Airbagmodul gemäß Anspruch 1 oder 2, **dadurch gekennzeichnet, dass** die Abdeckung (130) einen oberen Abdeckungsabschnitt (136) mit einer eingebauten Ringwand (132) und mindestens ein Zentrierelement (134) umfasst, um die Abdeckung (130) an dem Lenkrad (200) zu zentrieren.

4. Airbagmodul gemäß mindestens einem der vorhergehenden Ansprüche 1 bis 3, **dadurch gekennzeichnet, dass** die Gasgeneratorhalterung (110) an der Abdeckung (130) mit Hilfe von mindestens einer zugehörigen Befestigung (160) befestigt ist, welche vorzugsweise mindestens einen Niet (162) umfasst.

5. Airbagmodul gemäß einem der Ansprüche 1 bis 4, **dadurch gekennzeichnet, dass** die Befestigungsmittel (140) mindestens einen Bolzen (142), vorzugsweise mindestens eine Schraube, und mindestens eine erste Mutter (144) umfassen, wobei der mindestens eine Bolzen (142) den Gasgenerator (120) mit Hilfe der mindestens einen ersten Mutter (144) an der Gasgeneratorhalterung (110) befestigt, wobei der mindestens eine Bolzen (142) mit Hilfe von mindestens einer zweiten Mutter (244) an dem Lenkrad (200) befestigt werden kann.

6. Airbagmodul gemäß einem der Ansprüche 1 bis 4, **dadurch gekennzeichnet, dass** die Befestigungsmittel (140) mindestens einen Bolzen (142), mindestens eine Unterlegscheibe (342) und mindestens eine Überwurfmutter (344) umfassen, wobei der mindestens eine Bolzen (142) den Gasgenerator (120) mit Hilfe der mindestens einen Unterlegscheibe (342) und der mindestens einen Überwurfmutter (344) an der Gasgeneratorhalterung (110) befestigt, wobei die mindestens eine Überwurfmutter (344) an dem Lenkrad (400) befestigt werden kann.

7. Airbagmodul gemäß Anspruch 6, **dadurch gekennzeichnet, dass** die mindestens eine Überwurfmutter (344) an einer zugehörigen Lenkradfeder (442) des Lenkrades (400) befestigt werden kann.

8. Airbagmodul gemäß mindestens einem der vorhergehenden Ansprüche 1 bis 7, **dadurch gekennzeichnet, dass** die Gasgeneratorhalterung (110) mit Hilfe von mindestens einer zugehörigen Befestigung (160) an der Abdeckung (130) befestigt ist, wobei die mindestens eine zugehörige Befestigung (160) vorzugsweise mindestens einen Niet (162) aufweist.

9. Airbagmodul gemäß mindestens einem der vorhergehenden Ansprüche 1 bis 8, **dadurch gekennzeichnet, dass** das Airbaggewebe (115) einen Gewebe-, Wirk- oder Faservliesstoff aufweist.

10. Airbagmodul gemäß mindestens einem der vorhergehenden Ansprüche 1 bis 9, **dadurch gekennzeichnet, dass** das Airbaggewebe (115) natürliche Fasern, synthetische Fasern und/oder anorganische Fasern umfasst.

11. Anordnung von einem Airbagmodul (100) gemäß Anspruch 1 und einem Lenkrad (200), wobei die Befestigungsmittel (140) an dem Lenkrad (200) befestigt sind.

## Revendications

1. Un module airbag (100) pour un volant (200) comprenant des moyens de fixation (140) et comprenant en outre un support de générateur de gaz (110) qui relie un générateur de gaz (120) avec un couvercle (130), le dit support de générateur de gaz (110) fixé au dit générateur de gaz (120) et au dit couvercle (130), dans lequel le dit support de générateur de gaz (110) comprend un tissu d'airbag (115) **caractérisé en ce que** le dit générateur de gaz (120) comprend une extension de type bride (125) qui est fixée à une circonférence intérieure définie par une ouverture interne du support de générateur de gaz (110) avec une extrémité libre d'un sac airbag plié (180) via les dits moyens de fixation (140), les dits moyens de fixation (140) étant adaptés pour être fixés au dit volant (200).

2. Module airbag selon la revendication 1, **caractérisé en ce que** le dit support de générateur de gaz (110) est au moins sensiblement réalisé à partir du dit tissu d'airbag (115).

3. Module airbag selon les revendications 1 ou 2, **caractérisé en ce que** le couvercle (130) comprend une partie supérieure couvrante (136) avec une paroi annulaire intégrale (132) et au moins un élément de centrage (134) pour centrer le couvercle (130) au dit volant (200).

4. Module airbag selon au moins l'une des revendications précédentes 1 à 3, **caractérisé en ce que** le dit support de générateur de gaz (110) est fixé au couvercle (130) au moyen d'au moins une fixation associée (160), qui comprend de préférence au moins un rivet (162).

5. Module airbag selon l'une des revendications 1 à 4, **caractérisé en ce que** les dits moyens de fixation (140) comprennent au moins un boulon (142), de préférence au moins une vis, et au moins un premier écrou (144), que le dit au moins un boulon (142) fixant le dit générateur de gaz (120) au dit support de générateur de gaz (110) au moyen du dit au moins un premier écrou (144), dans lequel le dit au moins un boulon (142) est adapté pour être fixé sur le dit volant (200) au moyen d'au moins un deuxième écrou (244).

6. Module airbag selon l'une des revendications 1 à 4, **caractérisé en ce que** les dits moyens de fixation (140) comprennent au moins un boulon (142), au moins une rondelle (342) et au moins un écrou borgne (344), le dit au moins un boulon (142) fixant le dit générateur de gaz (120) au dit support de générateur de gaz (110) au moyen de la dite au moins une rondelle (342) et du dit au moins un écrou borgne (344), dans lequel le dit au moins un écrou borgne (344) est adapté pour être fixé audit volant (400).

7. Module airbag selon la revendication 6, **caractérisé en ce que** le dit au moins un écrou borgne (344) est adapté pour être fixé à un ressort de volant associé (442) du dit volant (400).

8. Module airbag selon l'une au moins des revendications précédentes 1 à 7, **caractérisé en ce que** le dit support de générateur de gaz (110) est fixé au dit couvercle (130) au moyen d'au moins une attache associée (160), la dite au moins une fixation associée (160) comprenant de préférence au moins un rivet (162).

9. Module airbag selon l'une au moins des revendications précédentes 1 à 8, **caractérisé en ce que** le dit tissu de coussin gonflable (115) comprend un tissu tissé, tricoté ou non tissé.

10. Module airbag selon l'une au moins des revendications précédentes 1 à 9, **caractérisé en ce que** le dit tissu d'airbag (115) comprend des fibres naturelles, des fibres synthétiques et/ou des fibres minérales.

11. Un assemblage d'un module d'airbag (100) selon la revendication 1 et d'un volant (200), **caractérisé en ce que** les dits moyens de fixation (140) sont fixés sur le dit volant (200).
